(19) Europäisches Patentamt — European Patent Office — Office européen des brevets

(11) **EP 4 492 363 A1**

(12) # EUROPEAN PATENT APPLICATION
published in accordance with Art. 153(4) EPC

(43) Date of publication:
**15.01.2025 Bulletin 2025/03**

(21) Application number: **23766591.4**

(22) Date of filing: **24.02.2023**

(51) International Patent Classification (IPC):
**G09B 9/00** (2006.01)  **G09B 19/24** (2006.01)
**G09B 23/30** (2006.01)  **G06T 15/04** (2011.01)
**G06T 15/06** (2011.01)  **G06T 19/00** (2011.01)
**G06Q 10/04** (2023.01)

(52) Cooperative Patent Classification (CPC):
**G06Q 10/04; G06T 15/04; G06T 15/06;
G06T 19/00; G09B 9/00; G09B 19/24; G09B 23/30**

(86) International application number:
**PCT/JP2023/006716**

(87) International publication number:
**WO 2023/171413 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.03.2022 JP 2022035367**

(71) Applicant: **Sony Group Corporation**
**Tokyo 108-0075 (JP)**

(72) Inventor: **HEREDIA, Saul**
**Tokyo 108-0075 (JP)**

(74) Representative: **D Young & Co LLP**
**3 Noble Street**
**London EC2V 7BQ (GB)**

(54) **SIMULATOR, SIMULATION DATA GENERATION METHOD, AND SIMULATOR SYSTEM**

(57) A simulator (1) includes a processing unit (2) that meshes and models a soft object (01) into a plurality of polyhedrons, in which particles (p) are arranged at respective vertices, such that the soft object (01) includes a plurality of particles (p) and calculates, with conditions for minimizing potential energy density of the modeled polyhedrons as constraints, from a distance among the plurality of particles (p) in the polyhedrons and mass (m) of the plurality of particles (p), deformation of the soft object (01) to which an external force is applied.

## FIG.2

## Description

Field

The present disclosure relates to a simulator, a simulation data generation method, and a simulator system.
Background
For example, Patent Literature 1 discloses a technique of simulating, with a finite element method (FEM), an organ that is deformed in real time.

Citation List

Patent Literature

Patent Literature 1: JP 2008-292534 A
Patent Literature 2: JP 2013-152320 A

Non Patent Literature

Non Patent Literature 1: Xu, L., Lu, Y., & Liu, Q. (2018). "Integrating viscoelastic mass spring dampers into position-based dynamics to simulate soft tissue deformation in real time." Royal Society open science, 5 (2), 171587.
Non Patent Literature 2: Pan, J., Yang, Y., Gao, Y., Qin, H., & Si, Y. (2019). "Real-time simulation of electrocautery procedure using meshfree methods in laparoscopic cholecystectomy." The Visual Computer, 35 (6), 861-872.
Non Patent Literature 3: Valentin, et al. "Single-image svbrdf capture with a rendering-aware deep network." ACM Transactions on Graphics (ToG) 37.4 (2018): 1-15.

Summary

Technical Problem

When deformation of a soft object such as an organ is simulated using the finite element method, calculation cost increases.
One aspect of the present disclosure reduces calculation cost required for simulation of the deformation of the soft object.

Solution to Problem

A simulator according to one aspect of the present disclosure includes a processing unit that: meshes and models a soft object into a plurality of polyhedrons, in which particles are arranged at respective vertices, such that the soft object includes a plurality of particles; and calculates, with conditions for minimizing potential energy density of the modeled polyhedrons as constraints, from a distance among the plurality of particles in the polyhedrons and mass of the plurality of particles, deformation of the soft object to which an external force is applied.
A simulation data generation method according to one aspect of the present disclosure includes: meshing and modeling a soft object into a plurality of polyhedrons, in which particles arranged at respective vertices, such that the soft object includes a plurality of particles; and calculating, with conditions for minimizing potential energy density of the modeled polyhedron as constraints, from a distance among the plurality of particles in the polyhedron and mass of the plurality of particles, deformation of the soft object to which an external force is applied.
A simulator system according to one aspect of the present disclosure includes: a simulator that meshes and models a soft object into a plurality of polyhedrons, in which particles are arranged at respective vertices, such that the soft object includes a plurality of particles and calculates, with conditions for minimizing potential energy density of the modeled polyhedrons as constraints, from a distance among the plurality of particles in the polyhedrons and mass of the plurality of particles, deformation of the soft object to which an external force is applied; and a haptic device operated by a user.

Brief Description of Drawings

FIG. 1 is a diagram schematically illustrating an overview of a simulator system according to an embodiment.
FIG. 2 is a diagram illustrating an example of functional blocks of the simulator system.
FIG. 3 is a diagram schematically illustrating an example of modeling.
FIG. 4 is a diagram illustrating an example of collision detection.
FIG. 5 is a diagram illustrating the example of the collision detection.
FIG. 6 is a diagram illustrating an example of rendering using ray tracing.
FIG. 7 is a diagram illustrating an example of a simulation loop.
FIG. 8 is a diagram schematically illustrating an overview of an entire simulation.
FIG. 9 is a diagram illustrating an example of a hardware configuration of a simulator.
FIG. 10 is a diagram illustrating a modification.

Description of Embodiments

Embodiments of the present disclosure are explained in detail below with reference to the drawings. Note that, in the embodiments explained below, redundant explanation is omitted by denoting the same elements with the same reference numerals and signs.

The present disclosure is explained according to order of items described below.

0. Introduction
1. Embodiment

1.1 Modeling
1.2 Calculation of deformation (particle positions) based on XPBD
1.2.1 FEM-based constraints
1.2.2 XPBD method
1.3 Calculation of a contact force
1.4 Photorealistic rendering
1.5 Simulation loop

2. Example of a hardware configuration
3. Modification
4. Example of effects

0. Introduction

Surgical treatment requires skill of a doctor, and a simulator is important as training for the surgical treatment. However, from the viewpoint of calculation load, it is difficult to perform a simulation in which a flexible organ is reproduced in real time and manipulation of the flexible organ can be felt. For that reason, a current simulation for surgery training uses a simple model and has a large gap from actual surgery. According to the disclosed technique, an accurate simulation is provided to contribute to skill improvement for surgeons. A conventional surgical simulation technique has focused on interactivity design and has not sufficiently examined physical and visual reality. There is a demand for a more realistic surgical simulation technique. The surgical simulation technique is not only useful for surgical training but also expected to be used for training of machine learning of surgical robot control.

When PBD (Position Based Dynamics) is used, sufficient accuracy in a real-time simulation is less easily obtained and it is difficult to calculate a contact force. If an elaborate technique such as FEM is used, computational cost increases. Concerning rendering as well, in rasterization-based rendering in the related art, reality is less easily obtained because, for example, the rendering is not adapted to global illumination.

In the disclosed technique, an XPBD (Extended Position Based Dynamics) is used in combination with the FEM. Deformation of a soft tissue (hereinafter referred to as "soft object") such as a modeled organ is calculated accurately and in real time using the XPBD. A contact force is calculated and fed back to a user via a haptic device. Further, the use of a ray tracing technique enables rendering with high reality (photorealistic rendering). There is provided a surgical simulation with a sense of realism that not only has interactivity but also can perform real visualization, tactile feedback, and the like. Since a situation similar to an actual surgical scenario can be reproduced, the surgical simulation is also useful for training of machine learning.

A simulation technique is explained. The simulation technique of the related art is based on a mass-spring model and a shape-matching model that are solved by position based dynamics. Since these models are not adapted to the theory of elasticity and material parameters, deformation of a soft object cannot be accurately calculated. Since the FEM includes large-scale matrix multiplication, real-time simulation is difficult particularly when topology changes. Therefore, the disclosed technique calculates deformation of a soft object based on XPBD using FEM-based constraints.

The calculation of the deformation of the soft object based on the XPBD is executed on a GPU (Graphical Processing Unit) separately from a CPU (Central Processing Unit). A simulation model is initialized and data concerning all polyhedrons and particles (explained below) included in the model is stored in a memory buffer. During the simulation, the data is transferred from the CPU to the GPU, where the FEM-based constraints are solved to calculate displacement vectors for the particles. For example, the Jacobi method is used. In the Jacobi method, displacement vectors are averaged to update the position of the particles. This operation is repeated until a solution converges. Obtained data is returned from the GPU to the CPU. The deformation of the modeled soft object including many polyhedrons and particles can be simulated in real time.

A tactile feedback technique is explained. Tactile feedback techniques of the related art are classified into two major categories, that is, a penalty-based method (in which force is proportional to an amount of penetration) and a virtual coupling-based method (in which force is proportional to extension of virtual interlocking, known as proxy-based). These methods can obtain a stable tactile feedback for a rigid body (hereinafter also referred to as "rigid object") such as a modeled surgical instrument but are difficult for a soft object. Therefore, the disclosed technique simulates an interaction between a rigid object and a soft object and calculates a contact force based on XPBD.

Specifically, collision between particles defining the soft object and the rigid object is detected and a contact force is calculated. For example, processing of the collision detection is speeded up by using spatial hashing. In spatial hashing, a space is subdivided into uniform spatial grids. From the viewpoint of efficiency, the diameters of all the particles are unified and the size of grid cells is determined accordingly. A cell index is calculated for each of the particles using a hash function. To specify collision pairs, for the particles, collision with particles included in the same cells as cells in which the particles are located and cells adjacent to the cells is tested. A penetration depth and a contact normal vector are calculated for each of the collision pairs. Finally, a collision reaction is calculated based on the XPBD. Accordingly, force acting on the particles is calculated as a part of a solution. A total force of the particles is calculated as a contact force.

A rendering technique is explained. A surgical simulation technique of the related art uses 3D renderings based on rasterization and local illumination. These renderings cannot accurately model a global illumination phenomenon such as metal reflection and sufficient reality cannot be obtained. Therefore, the disclosed technique generates a realistic image similar to an actual surgical scenario with photorealistic rendering using a ray tracing technique.

The ray tracing technique is used, for example, in a game engine or the like. Ray tracing models an interaction between a light source and a virtual object and generates real reflection and shadows. Final display depends mainly on a mesh model and a designated substance. A visual substance is modeled by a series of images (that is, textures) including information for an illumination model. Examples of the textures include an albedo map (color information), a roughness map, a metallic map, a normal map (surface information), and a specular map (reflectance). These textures are generated using a photograph of a real object or using image authoring software. A 3D mesh model is created using 3D modeling software. There is an object, a mesh shape of which does not change because the object is static or rigid. However, a deformable mesh is updated for each simulation frame according to soft body dynamics.

1. Embodiment

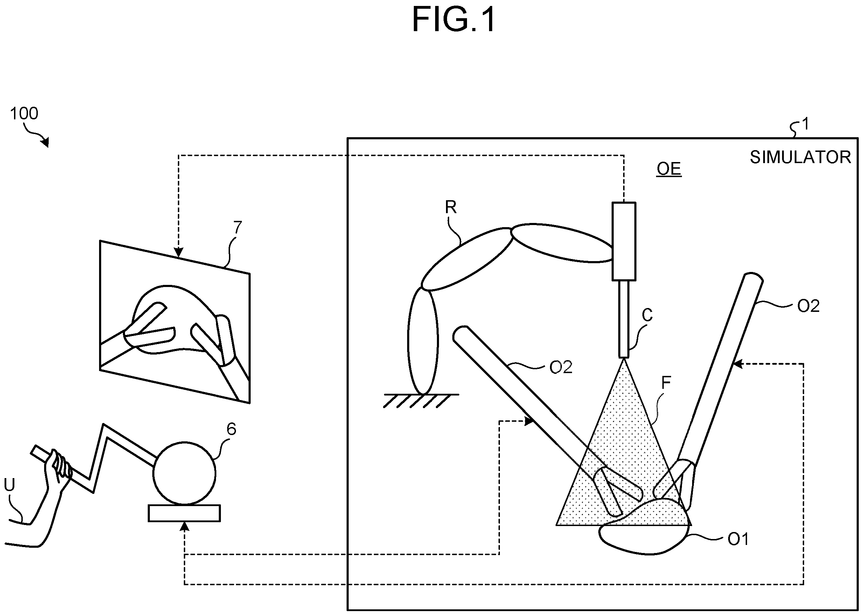

FIG. 1 is a diagram schematically illustrating an overview of an information processing system according to an embodiment. A simulator system 100 includes a simulator 1, a haptic device 6, and a monitor 7. A user of the simulator system 100 is referred to as user U. In FIG. 1, only a hand portion of the user U is schematically illustrated.

The simulator 1 is a device (for example, an information processing apparatus) that simulates a surgical environment OE. In FIG. 1, the surgical environment OE is schematically illustrated on the inner side of the simulator 1. The surgical environment OE includes virtual elements related to surgery. As the elements included in the surgical environment OE, a soft object O1, a rigid object 02, a robot arm R, and a camera C are illustrated in FIG. 1.

An example of the soft object O1 is a soft tissue such as an organ. An example of the rigid object O2 is a tool such as a surgical instrument. The robot arm R is a surgical robot arm that supports a camera C. The camera C is a camera for surgery and images a surgical field including the soft object O1 and the rigid object O2. A field of view of the camera C is referred to as field of view F and illustrated. Note that an image may be understood as a meaning including a video. The image and the video may be replaced with each other as appropriate within a range without contradiction.

The haptic device 6 (a tactile device) is a device operated by the user U touching (with a hand) in order to operate the rigid object O2. Various publicly known devices used for a surgical simulation and the like may be used. The user U moves the haptic device 6 to operate the rigid object O2. The surgical simulation is advanced by holding and cutting the soft object O1 using the rigid object O2. When the rigid object O2 comes into contact with the soft object O1, an external force is applied to the soft object O1 and the soft object O1 is simulated to, for example, be deformed. A contact force generated by interaction of the soft object O1 and the rigid object O2 is reflected in the operation of the rigid object O2 by the user U via the haptic device 6 and fed back to the user U.

The monitor 7 displays an image in the field of view F of the camera C explained above, that is, an image including (at least a part of) the soft object O1 and the rigid object O2. The user U operates the haptic device 6 while viewing the image displayed on the monitor 7. The position, the angle, and the like of the camera C may also be operated by the user U. An operation unit of the camera C may be incorporated in the haptic device 6 or may be provided separately from the haptic device 6. Operation of the camera C may be automatically performed. For example, a function of a control unit that automatically operates the camera C may be incorporated in the surgical environment OE.

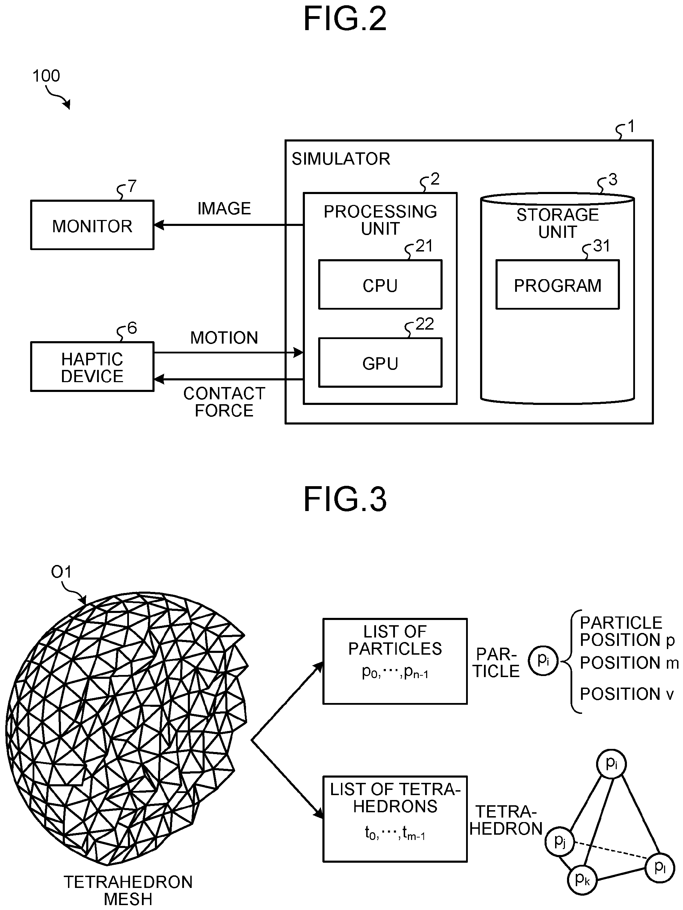

FIG. 2 is a diagram illustrating an example of functional blocks of the simulator system. As explained above, the simulator system 100 includes the simulator 1, the haptic device 6, and the monitor 7. In FIG. 2, an example of functional blocks of the simulator 1 is also illustrated.

The simulator 1 includes a processing unit 2 and a storage unit 3. The processing unit 2 includes at least one processor. In FIG. 2, a CPU 21 and a GPU 22 are exemplified as a processor included in the processing unit 2. A program 31 is exemplified as information stored in the storage unit 3. The program 31 is an information processing program (software or the like) for causing a computer to function as the simulator 1.

A motion is input to the processing unit 2 via the haptic device 6. The motion is information such as a position, a posture, and force. The processing unit 2 causes a motion of the rigid object O2 in the surgical environment OE to correspond to the motion input via the haptic device 6. The user U operates the rigid object O2 in the surgical environment OE via the haptic device 6.

As explained in detail below, the processing unit 2 calculates a contact force generated by contact between the rigid object O2 and the soft object O1. The calculated contact force is sent from the processing unit 2 to the haptic device 6 and fed back to the user U via the haptic device 6.

As explained above, the surgical environment OE includes the camera C and a captured image of the camera C is displayed by the monitor 7 (FIG. 1). The image captured by the camera C is sent from the processing unit 2 to the monitor 7 and displayed.

Processing executed by the processing unit 2 concerning a simulation is further explained.

1.1 Modeling

The processing unit 2 models an object such as the soft object O1 in the surgical environment OE. The modeling is performed on the CPU 21.

FIG. 3 is a diagram schematically illustrating an example of the modeling. The processing unit 2 meshes and models the soft object O1 into a plurality of polyhedrons. In this example, the polyhedron is a tetrahedron. In the following explanation, the polyhedron is assumed to be a tetrahedron unless particularly explained otherwise. The polyhedron and the tetrahedron may be replaced with each other within a range without contradiction.

Particles are arranged at vertices of each of the plurality of polyhedrons. Therefore, the soft object O1 is modeled to include a plurality of particles. The particles or the positions of the particles (particle positions) are represented using a sign p. Subscripts are sometimes added to reference signs of particles p and particle positions p such that the particles p and the particle positions p can be distinguished. A tetrahedron is defined by a plurality of particles p. The tetrahedron is referred to as tetrahedron t and illustrated. Subscripts are sometimes added to reference signs of tetrahedrons t such that tetrahedrons t can be distinguished.

In the example illustrated in FIG. 3, the soft object O1 includes m tetrahedrons t, that is, a tetrahedron $t_0$ to a tetrahedron $t_{m-1}$ and includes n particles, that is, particles $p_0$ to $p_{n-1}$. One particle p is arranged at each vertex of each tetrahedron t. Each particle p has properties of a particle position p, mass m, and a velocity v. Column vectors of four particles p or particle positions p of the particles p, for example, tuples $\{p_i, p_j, p_k, p_l\}$ of illustrated position vectors defines one tetrahedron t.

Referring back to FIG. 2, the processing unit 2 simulates the surgical environment OE including the soft object O1 and the like modeled as explained above. When an external force is applied to the soft object O1 because, for example, the rigid object O2 comes into contact with the soft object O1, the soft object O1 is deformed. The deformation of the soft object O1 is, for example, elastic deformation and is based on the physical law.

1.2 Calculation of deformation (particle positions) based on XPBD

In the present embodiment, the processing unit 2 calculates, based on the XPBD, deformation of the soft object O1 to which the external force is applied. In this example, with conditions for minimizing the potential energy density of the modeled tetrahedron t as constraints (equivalent to constraints in the XPBD), the deformation of the soft object O1 to which the external force is applied is calculated from the distance among a plurality of particles p in the tetrahedron t and mass m of the plurality of particles p. The calculation of the deformation of the soft object O1 is executed on the GPU 22 of the processing unit 2. Information (data) such as the modeling explained above is passed from the CPU 21 to the GPU 22.

1.2.1 FEM-based constraints

As the constraints in the XPBD, FEM-based constraints are used. The FEM-based constraints are the conditions for minimizing the potential energy density of the soft object O1 modeled as explained above. The constraints are specifically explained below.

The constraints are determined for the plurality of particles p for each of the tetrahedrons t. Assuming that an initial particle position p is the following Expression (1), a matrix of the following Expression (2) is calculated in advance.

$$\{\bar{p}_i, \bar{p}_j, \bar{p}_k, \bar{p}_l\} \quad \cdots (1)$$

$$\bar{P} = \left(\bar{p}_j - \bar{p}_i \quad \bar{p}_k - \bar{p}_i \quad \bar{p}_l - \bar{p}_i\right) \quad \cdots (2)$$

Assuming that the current particle position p is $\{p_i, p_j, p_k, p_l\}$, a deformation gradient is calculated as indicated by the following Expression (3).

$$F = \left(p_j - p_i \quad p_k - p_i \quad p_l - p_i\right)\bar{P}^{-1} \quad \cdots (3)$$

Thereafter, a strain tensor is calculated using the following Expression (4).

$$E = \frac{1}{2}(F^T F - I) = \begin{pmatrix} e_x & e_{xy} & e_{zx} \\ e_{xy} & e_y & e_{yz} \\ e_{zx} & e_{yz} & e_z \end{pmatrix} \quad \cdots (4)$$

If the Vogt notation is used, the strain tensor is described as a vector as indicated by the following Expression (5).

$$\varepsilon = (e_x \quad e_y \quad e_z \quad 2e_{xy} \quad 2e_{yz} \quad 2e_{zx})^T \quad \cdots (5)$$

For a theory of elasticity, the Hooke's law represented by the following Expression (6) is used.

$$\sigma = K\varepsilon \quad \cdots (6)$$

K in the above Expression (6) is a stiffness matrix function of material parameters. In a linear isotropic substance, K can be determined by Lamé parameters $\lambda$ and $\mu$ derived from the Young's modulus E and the Poisson's ratio v as indicated by the following Expressions (7) to (9).

$$K = \begin{pmatrix} \lambda + 2\mu & \lambda & \lambda & 0 & 0 & 0 \\ \lambda & \lambda + 2\mu & \lambda & 0 & 0 & 0 \\ \lambda & \lambda & \lambda + 2\mu & 0 & 0 & 0 \\ 0 & 0 & 0 & 2\mu & 0 & 0 \\ 0 & 0 & 0 & 0 & 2\mu & 0 \\ 0 & 0 & 0 & 0 & 0 & 2\mu \end{pmatrix} \quad \cdots (7)$$

$$\lambda = \frac{Ev}{(1 + v)(1 - 2v)} \quad \cdots (8)$$

$$\mu = \frac{E}{2(1+v)} \quad \cdots (9)$$

The potential energy density of elastic deformation is calculated as indicated by the following Expression (10).

$$\int_0^\varepsilon \sigma d\varepsilon = \frac{1}{2} \varepsilon^T K \varepsilon \quad \cdots (10)$$

For example, as it is known in Non Patent Literature 1, in the XPBD method, a constraint function of Expression C (x)=0 is solved by minimizing potential energy density (also referred to as potential energy field or the like). A constraint expression is as indicated by the following Expression (11). $\alpha$ in the expression is elastic compliance (the inverse of rigidity).

$$\frac{1}{2} C(p)^T \alpha^{-1} C(p) \quad \cdots (11)$$

As a conclusion, the FEM-based constraints are defined as indicated by the following Expression (12).

$$C(p) = \varepsilon = 0 \quad \text{with } \alpha = K^{-1} \quad \cdots (12)$$

1.2.2 XPBD method

The processing unit 2 calculates, with the FEM-based constraints as constraints in the XPBD, based on the XPBD, the deformation of the soft object O1 to which the external force is applied. For example, the processing unit 2 calculates displacement of each of the plurality of particles p satisfying the constraints. The calculations are specifically explained below.

The particle position p is updated by processing called constraint projection according to the following Expressions (13) to (15). In the Expressions, $\Delta p$ is displacement of the particle p, M is a mass matrix, and $\Delta\lambda$ is a change of $\lambda$ of the Lagrange multiplier method.

$$\Delta p = M^{-1} \nabla C(p)^T \Delta\lambda \quad \cdots (13)$$

$$\Delta\lambda = \frac{-C(p) - \tilde{\alpha}\lambda}{\nabla C(p) M^{-1} \nabla C(p)^T + \tilde{\alpha}} \quad \cdots (14)$$

$$\tilde{\alpha} = \alpha / \Delta t^2 \quad \cdots (15)$$

Since C (p) is a six-element column vector, high-dimensional matrix multiplication is required to calculate displacement of the particle p. To address this problem, eigenvalue decomposition of a stiffness matrix is used as indicated by the following Expression (16). Q in the expression is a rotation matrix, A is a diagonal matrix, and each of an eigenvector and an eigenvalue are K.

$$K = Q^T \Lambda Q \quad \cdots (16)$$

This rotation matrix is applied to a strain vector to calculate a vector as indicated by the following Expression (17).

$$C(p) = Q\varepsilon \quad \text{with } \alpha = \Lambda \quad \cdots (17)$$

Since A is the diagonal matrix, a vector C (p) is treated as six individual constraint functions.

Element inversion processing is explained. The tetrahedron t is assumed to be inverted when volume is changed from an original configuration. The volume of the tetrahedron t is calculated as indicated by the following Expression (18).

$$V = \frac{1}{6} det\left[ \left( p_j - p_i \quad p_k - p_i \quad p_l - p_i \right) \right] \quad \cdots (18)$$

The strain tensor formula determined as explained above is inconvenient in that inverted elements cannot be distinguished. That is, a definition of a green strain tensor is examined as indicated by the following Expression (19). Note that E in Expression (19) here is a strain tensor and is different from the Young's modulus explained above. F in the expression represents a deformation gradient (here, a deformation gradient of a polyhedron). If the polyhedron is inverted by large deformation, a change in F is observed. Note that, when the vertices of the polyhedron are present on the same plane, F=0. However, since $F^T F$ is a quadratic expression, the strain tensor E cannot distinguish the inverted elements. This can be understood by replacing F with - F and setting $F^T F = (- F)^T (- F)$ in the following Expression (19).

$$E = \frac{1}{2}(F^T F - I) = \frac{1}{2}((-F)^T (-F) - I) \quad \cdots (19)$$

When an element is slightly inverted, a full inverted solution of the element is realized by a constraint expression C (p)=Qε. This can be particularly problematic when there is large deformation. To prevent inversion of the tetrahedron t, a volume conservation constraint may be introduced. The volume conservation constraint may be a condition for preserving the volume energy density of each of the plurality of tetrahedrons t. This condition may be incorporated in the FEM-based constraints explained above. For a compressible substance, the volume energy density function is calculated by the following Expression (20) and Expression (21). B in the expressions is a function of a volume elasticity modulus and a Lamé parameter.

$$\Psi = \frac{1}{2}B(det(F) - 1)^2 \quad \cdots (20)$$

$$B = \lambda + \frac{2}{3}\mu \quad \cdots (21)$$

An additional volume conservation constraint function is as indicated by the following Expression (22).

$$C(p) = det(F) - 1 \quad with \; \alpha = B^{-1} \quad \cdots (22)$$

Since the above approach can process a compressible substance having any value of a Poisson's ratio v, the approach is different from a method such as the Neo-Hookean method. A neo-Hookean substance is only effective for an incompressible material (v is approximately 0.5). Since the volume conservation constraint function explained above is a scalar constraint, calculation cost is low. The volume conservation constraint function can be easily incorporated in the XPBD method.

The Jacobi method may be used to solve the constraint projection, that is, to calculate displacement of each of a plurality of particles. For example, parallel processing can be more easily performed than when the Gauss-Seidel iteration method. A plurality of kinds of processing of reading and writing can be simultaneously performed. If the Gauss-Seidel iteration method is used, constraints are sequentially processed and the particle position p is updated every time the constraints are processed. Convergence is faster and one iteration is actually sufficient when using small time steps, but the parallel processing is difficult. If the Jacobi method is used, the constraints can be processed in parallel. The displacement of the particles p is accumulated in an auxiliary buffer using an atomic sum. Finally, the displacements are averaged and added for each of the particles p in parallel. Note that a fixed number of times of iteration for convergence is required.

Based on the principle explained above, the processing unit 2 calculates displacement of each of the plurality of particles p and deformation of the soft object O1 using the FEM-based constraints as constraints in the XPBD. The calculation of the deformation of the soft object O1 can be processed in parallel based on the XPBD (a parallel XPBD solver). A calculation result is returned from the GPU 22 to the CPU 21.

1.3 Calculation of a contact force

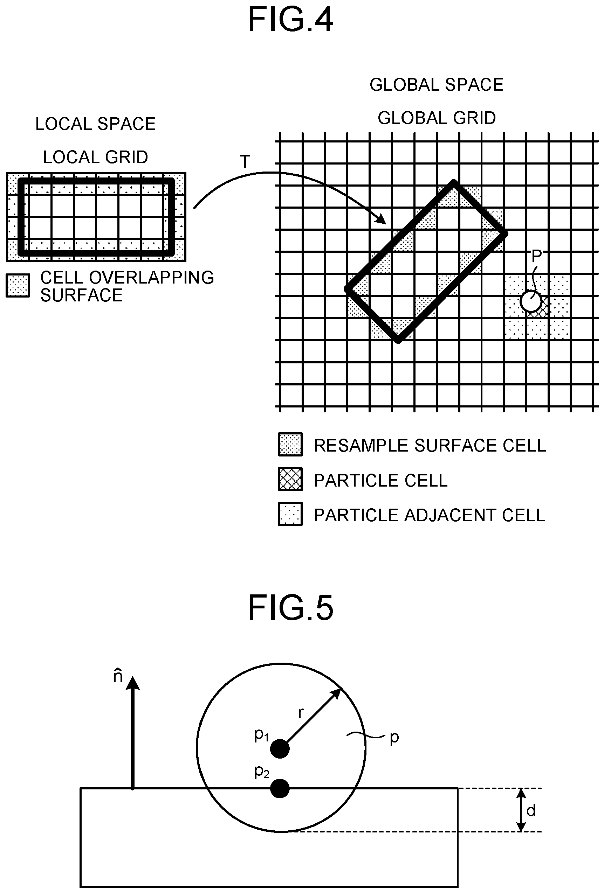

The processing unit 2 calculates a contact force generated by interaction between the rigid object O2 and the soft object O1. This calculation of the contact force is executed on the CPU 21 of the processing unit 2. First, the processing unit 2 detects collision between the soft object O1 and the rigid object O2, more specifically, collision between the particles p of the soft object O1 and the rigid object O2 and generates a collision pair. In order to increase the speed of collision detection processing, a spatial hash algorithm for subdividing a space into uniform grids is used. This is explained with reference to FIG. 4 and FIG. 5.

FIG. 4 and FIG. 5 are diagrams illustrating an example of the collision detection. A collision shape (a collision geometry) of a local space subdivided into local grids is transferred, by rigid body transformation T, to a global space subdivided into global grids. The collision shape is generalization of the rigid object O2 and is a box shape in this example. In the global space, collision between the collision shape and the particles p is detected.

Cells shown as cell overlapping surfaces in the local space are cells of uniform grids overlapping the surface of the collision shape indicated by bold lines. These cells are pre-calculated in local space with respect to the origin of the collision shape. The centers of the cells are stored in a buffer prior to the start of a simulation.

During the simulation, the rigid body transformation T={t, r} of the collision shape is performed. t and r indicate a translation vector and a rotation quaternion. The pre-computed center of the cell is transformed as c'=t+r*c by the rigid body transformation T. c is the center of the cell in the local space of the collision shape. c' is the center of the cell in the global space. Note that, by discretizing c and c' to grid integer coordinates, cell indexes are respectively obtained for the local grid of the local space and the global grid of the global space. Processing of transferring from the local grid to the global grid is referred to as cell resampling. Resampled cells are illustrated as resampled surface cells in the global space.

From the viewpoint of improving efficiency, all the particles p are set to have the same radius r and the cells are set to have length twice as large as the radius r of the particles p. In this case, the particles p are likely to collide with only the other particles p that shares the same cells as and cells adjacent to the cells in which the particles p are located. With the cell length represented as l, the particles $p \in R^3$ of coordinates $p_x, p_y, p_z$ are discretized into integer coordinates as indicated by the following Expression (23).

$$(i \ j \ k) = \left( \lfloor p_x / l \rfloor \ \lfloor p_y / l \rfloor \ \lfloor p_z / l \rfloor \right) \quad \cdots (23)$$

Thereafter, using a hash function indicated by the following Expression (24), a hash key corresponding to the hash function is calculated.

$$hash(i, j, k) = ip_1 \oplus jp_2 \oplus kp_3 \quad \cdots (24)$$

In the above Expression (24), $p_1$, $p_2$, and $p_3$ are large prime numbers, and arithmetic units (encircled symbols +) indicate bitwise XOR arithmetic units. The hash key represents a bucket (bucket) of a hash table and stores reference information of all the particles p to be mapped to a predetermined hash key. Note that a bucket corresponding to the adjacent cell can be specified by adding an offset of {-1, 0, +1} for each of individual coordinates i, j, and k.

After constructing the hash table, collision is detected by sampling the cells on the surface of the collision shape and tested with respect to the particles p included in the same cell and the adjacent cell. In the example illustrated in FIG. 4, because of symmetry, it is sufficient to test, rather than all 27 cells, only 14 cells including the center cell. Note that, when the hash table is constructed, a list of the particles p needs to be sorted by the hash key and the complexity of an algorithm is approximately 0 (nlogn).

In FIG. 5, the particle p colliding with the collision shape is exemplified. Some points in the particle p are referred to as point $p_1$ and point $p_2$ and illustrated. The point $p_1$ is a center point of the particle p. A point closest to the point $p_1$ on the surface of the collision shape is specified as the point $p_2$. In the figure, a contact range length (a penetration depth) with the particle p with respect to the collision shape is illustrated as contact distance d. A unit collision normal vector is indicated by n with a caret. The vector is directed to the outside of the collision shape.

Subsequently, a constraint function concerning collision is generated as indicated by the following Expression (25).

$$C(p_1, p_2) = \| p_1 - p_2 \| - r \geq 0 \quad \cdots (25)$$

A constraint given by the above Equation (25) is treated as hard. That is, $\alpha=0$ (infinite rigidity). This gives displacement $\Delta p_1$ of the particle p and gives $\lambda$ in a corresponding Lagrange method of undetermined multipliers.

Thereafter, for example, as known in Non Patent Literature 2, force acting on this one particle p (a contact force of the particle p) is calculated as indicated by the following Equation (26).

$$F = \frac{\lambda}{\Delta t^2} \hat{n} \quad \cdots (26)$$

Similarly, forces acting on all the particles p colliding with the same collision shape are calculated and totaled. A contact force generated by the interaction of the soft object O1 and the rigid object O2 is calculated.

1.4 Photorealistic rendering

The processing unit 2 generates an image to be displayed on the monitor 7 and transmits the image to the monitor 7. In order to generate a real image including the soft object O1 and the like, the soft object O1 and the like are rendered. The image generation by rendering may be executed on the GPU 22 of the processing unit 2. The GPU 22 here may be the same as or may be different from the GPU 22 used for the deformation calculation for the soft object O1 explained above.
In one embodiment, ray tracing is used. The ray tracing is a rendering method for tracing rays as pixels of an image plane to generate an image and simulating effects of collision with a virtual object. Photorealistic rendering for generating a real image like an actual surgical scene can be performed. For example, global illumination as known in Non Patent Literature 10 is possible.
In the related art, a rasterization method combined with a local illumination model that visualizes a 3D virtual scene is used. In the local illumination model, a complicated light phenomenon (reflected light or the like) cannot be accurately modeled. By using the ray tracing capable of the global illumination, high visual reality can be obtained as compared with a general scanline rendering method such as the rasterization method.
A dedicated engine may be used for the ray tracing. For example, a commercial game engine Unreal (registered trademark) Engine or the like is known and can be implemented in a GPU architecture. That is, the dedicated engine for the ray tracing is implemented on the GPU 22.

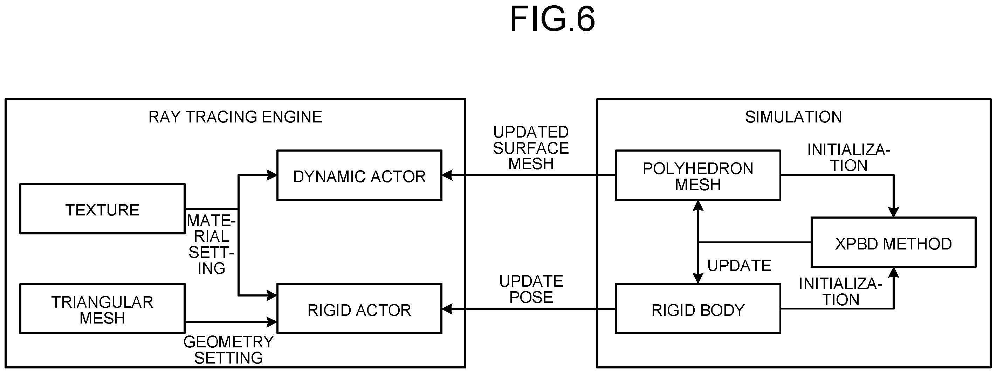

FIG. 6 is a diagram illustrating an example of the rendering using the ray tracing. In order to incorporate the environment of the ray-tracing engine for visualization, two types of visual models, that is, a rigid actor including a texture and a triangular mesh and a dynamic actor are implemented. Surface material setting by a texture and geometry setting by a triangular mesh are also performed. In the rigid actor, the triangular mesh is fixed and does not change as time elapses but a pose (a position, a direction, and the like) are changed during execution. In the dynamic actor, the triangular mesh changes.
The rigid actor in the ray tracing engine corresponds to the visual model of the rigid body (that is, the rigid object O2) in the simulation. The dynamic actor in the ray tracing engine corresponds to the visual model of the polyhedron mesh (that is, the soft object O1) in the simulation. Using these initialized models, the deformation, the contact force, and the like of the soft object O1 are calculated based on the XPBD as explained above. The polyhedron mesh and the rigid body are updated based on a calculation result.
At the end of the simulation frames, the visual model is updated according to a simulation result. For example, a pose (a position or the like) of the rigid body, the surface mesh of the polyhedron, and the like are updated. The rendering processing may be applied to only the outer surface of the mesh.
In photorealistic rendering, the quality of a visual material is also one of important factors. The visual material is defined by a series of parameters for adjusting how the surface acts with light. For example, the parameters are retained in a 2D image (also referred to as texture, map, or the like) imparted to the surface mesh by texture mapping. The visual material is defined by, for example, the following textures.

Albedo texture: color information
Normal texture: representing detailed information (unevenness or the like) on the surface by perturbing the surface normal.
Specular texture: reflectance of the surface
Roughness texture: smoothness of the surface
Metallic texture: metal-like surface exterior

The texture may be manually created, for example, with reference to an actual surface photograph. By using an inverse rendering method, a high-quality texture based on photographic data may be created. For example, as known in Non Patent Literature 3, inverse rendering is a technique for estimating characteristics of a material from an actual image using a deep learning model. Note that, as a technique contrastive to the inverse rendering, there is forward rendering for outputting an image based on input geometry, material characteristics of a surface, and a reproduced illumination state.

1.5 Simulation loop

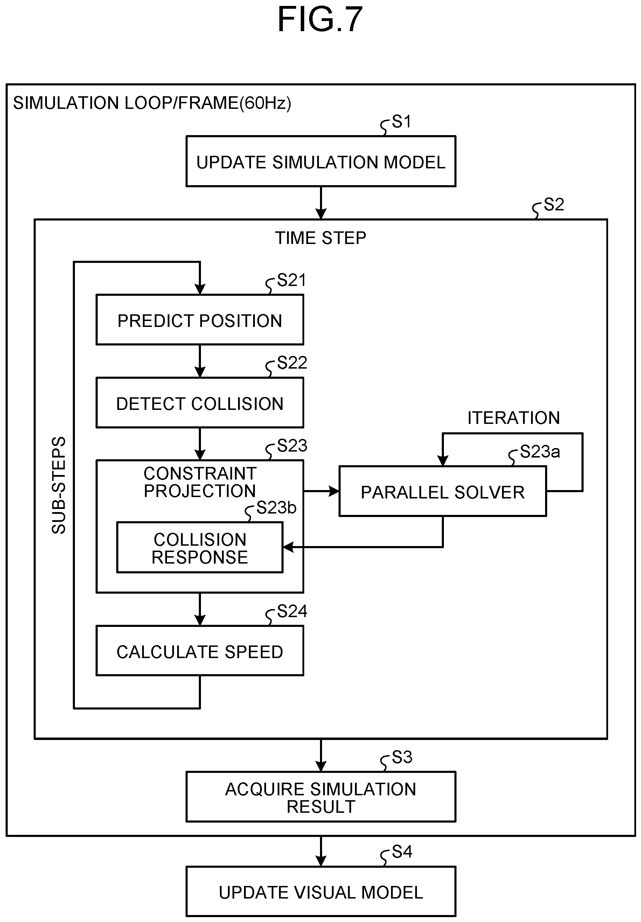

For example, the simulation including the modeling of the soft object O1 and the like, the calculation of the deformation (the particle position p) of the soft object O1 based on the XPBD, the calculation of the contact force, and the photorealistic rendering explained above is executed by the processing unit 2. A series of a flow of the simulation is explained with reference to FIG. 7.

FIG. 7 is a diagram illustrating an example of a simulation loop. Processing executed during one frame is schematically illustrated. This processing is repeatedly executed, for example, in 60 frames (60 Hz) per second.

In step S1, the simulation model is updated. This processing is executed on the CPU 21 of the processing unit 2. For example, the soft object O1 is incised by user operation via the haptic device 6. The mesh topology changes and the model of the soft object O1 or the like is updated.

In step S2, the simulation using the soft object O1 and the like updated in the preceding step S1 is executed. The processing in step S2 is subdivided into a fixed number of sub-steps. In the example illustrated in FIG. 7, processing in sub-step S21 to sub-step S24 are repeatedly executed.

The processing in sub-step S21 is position prediction processing. This processing is executed on the CPU 21 of the processing unit 2. For example, as indicated by the following Expression (27), a new particle position p is calculated by considering an external force $f_{ext}$ and flow velocity v thereof. h in the expression is a time step divided according to the number of sub-steps.

$$p = p + vh + m^{-1}f_{ext}h^2 \quad \cdots (27)$$

The processing in sub-step S22 is collision detection processing. This processing is executed on the CPU 21 of the processing unit 2. Collision with the rigid object O2 is detected based on the particle position p predicted in the preceding sub-step S21.

The processing in sub-step S23 is constraint projection processing. This processing is executed on the CPU 21 of the processing unit 2. By the constraint projection, necessary data is passed to the parallel solver, that is, the GPU 22 of the processing unit 2. On GPU 22, the FEM-based constraints are solved on the GPU 22 based on the XPBD and a new particle position p (displacement of the particle p) is calculated (sub-step S23a). In this example, the Jacobi method explained above is used and iterative processing thereof is also illustrated. A calculation result is returned from the GPU 22 to the CPU 21 and is obtained as a collision response (sub-step S23b).

The processing in sub-step S24 is speed calculation processing. This processing is executed on the CPU 21 of the processing unit 2. Based on the collision response obtained in the preceding sub-step S23b, that is, the new particle position p, the velocity v of the particle p is calculated and updated, for example, as indicated by the following Expression (28). $p_{prev}$ in the expression is the particle position p in the previous time step.

$$v = \frac{1}{h}\left(p - p_{prev}\right) \quad \cdots (28)$$

After the processing of the sub-step S24, the processing in sub-step S21 is executed again. This sub-step loop is repeated within a range of the time step in step S2.

In step S3, the simulation result in the preceding step S2 is acquired. This processing is executed on the CPU 21 of the processing unit 2. The simulation result includes the soft object O1 after deformation and the like.

In step S4, the visual model is updated. This processing is executed on the GPU 22 of the processing unit 2. The image including the soft object O1 is updated. By the photorealistic rendering explained above, a real image is generated.

The generated image is displayed by the monitor 7. The calculated contact force is fed back to the user U via the haptic device 6. For example, the simulation is advanced by repeatedly executing the above processing.

With the simulator system 100 explained above, a simulation of a surgical operation or the like having satisfactory interactivity is provided. In the simulation, accurate calculation of the deformation of the soft object O1, feedback of the contact force, real image generation by the photorealistic rendering, and the like can be performed. The simulator system 100 is useful for surgical training and is also useful for training of machine learning of surgical robot control.

Deformation of the soft object O1 of the soft tissue such as the organ is calculated by solving the FEM-based constraints in parallel with the XPBD. For example, since calculation cost is more reduced than when deformation is calculated by the FEM, simulation in real time can be performed. Accurate contact force feedback is performed and more realistic interactivity can be provided. With the photorealistic rendering, it is possible to generate a high-quality image on which real light reflection, shadows, and the like similar to a real surgical scenario are also reflected.

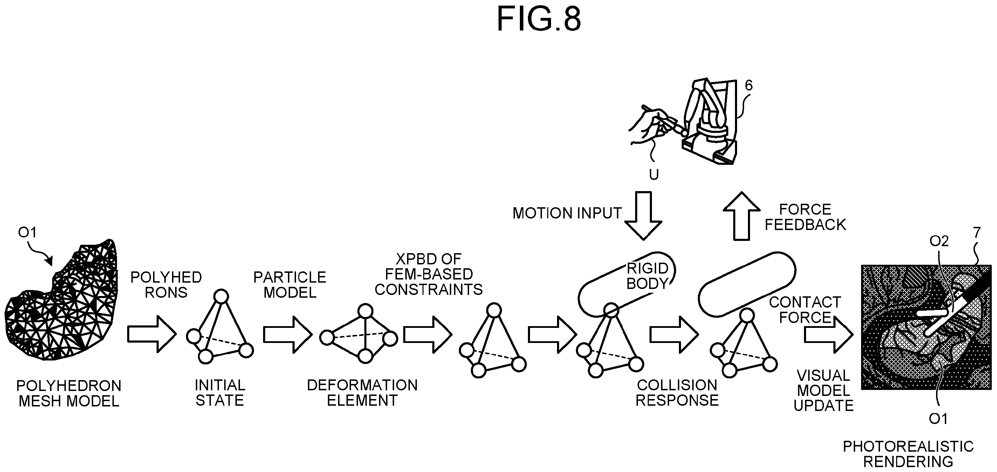

The entire simulation is explained again with reference to FIG. 8, although there is some overlap with the above explanation.

FIG. 8 is a diagram schematically illustrating an overview of the entire simulation. The simulation is started using a polyhedron mesh model. Polyhedrons are modeled to include the particles p. The polyhedrons are deformed from an initial state according to an external force or the like (a deformation element). For each of the polyhedrons, the FEM-based constraints are solved based on the XPBD to minimize potential energy density (for example, elastic potential energy).

When no external force is applied to the particle model, the soft object O1 (the deformation element) maintains a non-deformed state. In response to a motion input from the haptic device 6 (a tactile interface), the particles p of the soft object O1 collide with and interact with the rigid object O2 (a rigid body).

A contact force or the like obtained as a collision response is fed back to the user U via the haptic device 6 (force feedback). The visual model is updated according to a simulation result. An image is generated by the photorealistic rendering using the ray tracing rendering and displayed via the monitor 7.

2. Example of a hardware configuration

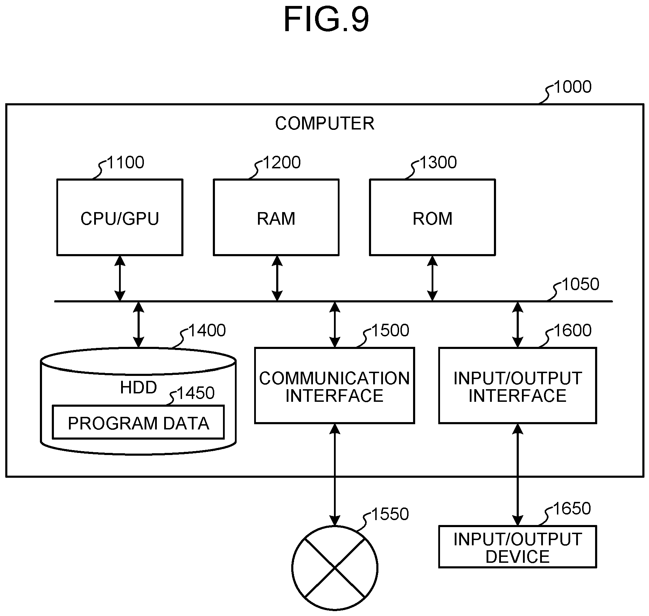

FIG. 9 is a diagram illustrating an example of a hardware configuration of the simulator. The simulator 1 explained above is implemented by, for example, a computer 1000 illustrated in FIG. 9.

The computer 1000 includes a CPU/GPU 1100, a RAM 1200, a ROM (Read Only Memory) 1300, an HDD (Hard Disk Drive) 1400, a communication interface 1500, and an input/output interface 1600. The units of the computer 1000 are connected by a bus 1050.

The CPU/GPU 1100 operates based on a program stored in the ROM 1300 or the HDD 1400 and controls the units. For example, the CPU/GPU 1100 loads, in the RAM 1200, programs stored in the ROM 1300 or the HDD 1400 and executes processing corresponding to the various programs.

The ROM 1300 stores a boot program such as a BIOS (Basic Input Output System) to be executed by the CPU/GPU 1100 when the computer 1000 is started, a program depending on hardware of the computer 1000, and the like.

The HDD 1400 is a computer-readable recording medium that non-transiently records a program to be executed by the CPU/GPU 1100, data used by the program, and the like. Specifically, the HDD 1400 is a recording medium that records a program 31 of the present disclosure that is an example of program data 1450.

The communication interface 1500 is an interface for the computer 1000 to be connected to an external network 1550 (for example, the Internet). For example, the CPU/GPU 1100 receives data from other equipment or transmits data generated by the CPU/GPU 1100 to the other equipment via the communication interface 1500.

The input/output interface 1600 is an interface for connecting an input/output device 1650 and the computer 1000. For example, the CPU/GPU 1100 receives data from an input device such as a keyboard or a mouse via the input/output interface 1600. The CPU/GPU 1100 transmits data to an output device such as a display, a speaker, or a printer via the input/output interface 1600. The CPU/GPU 1100 receives data of a motion from the haptic device 6 and transmits a simulated contact force to the haptic device via the input/output interface 1600. The input/output interface 1600 may function as a media interface that reads a program or the like recorded in a computer-readable predetermined recording medium (a medium). The medium is, for example, an optical recording medium such as a DVD (Digital Versatile Disc) or a PD (Phase change rewritable Disk), a magneto-optical recording medium such as a MO (Magneto-Optical Disk), a tape medium, a magnetic recording medium, or a semiconductor memory.

When the computer 1000 functions as the simulator 1 explained above, the CPU/GPU 1100 of the computer 1000 implements the functions of the processing unit 2 by executing a program (for example, the program 31) loaded on the RAM 1200. The program may be stored in the HDD 1400. Note that the CPU/GPU 1100 reads the program data 1450 from the HDD 1400 and executes the program data but, as another example, may acquire the program from another apparatus via the external network 1550.

The simulator 1 may be applied to a system including a plurality of apparatuses premised on connection to a network (or communication between apparatuses) such as cloud computing. When the cloud computing is used, the apparatuses may be connected to one another via an all-optical communication network. The connection by the all-optical communication network means that all communication among at least endpoint routers is constructed by optical communication. Note that communication after the endpoint routers may be electrical communication after photoelectric conversion. The apparatuses are connected with a low delay by the communication via a broadband all-optical communication network.

The components explained above may be configured using general-purpose members or may be configured by hardware specialized for the functions of the components. The configuration explained above can be changed as appropriate according to a technical level at each time when the configuration is implemented.

3. Modification

The simulation explained above may be applied to a surgical robot simulation. In the surgical robot simulation, the user U operates, via the haptic device 6, the robot arm supporting a surgical instrument T. Since the contact force is fed back to the user U, it is also possible to evaluate whether the robot arm is successfully operated with an appropriate operation force. It is possible to perform more effective training than when there is no feedback of the contact force.

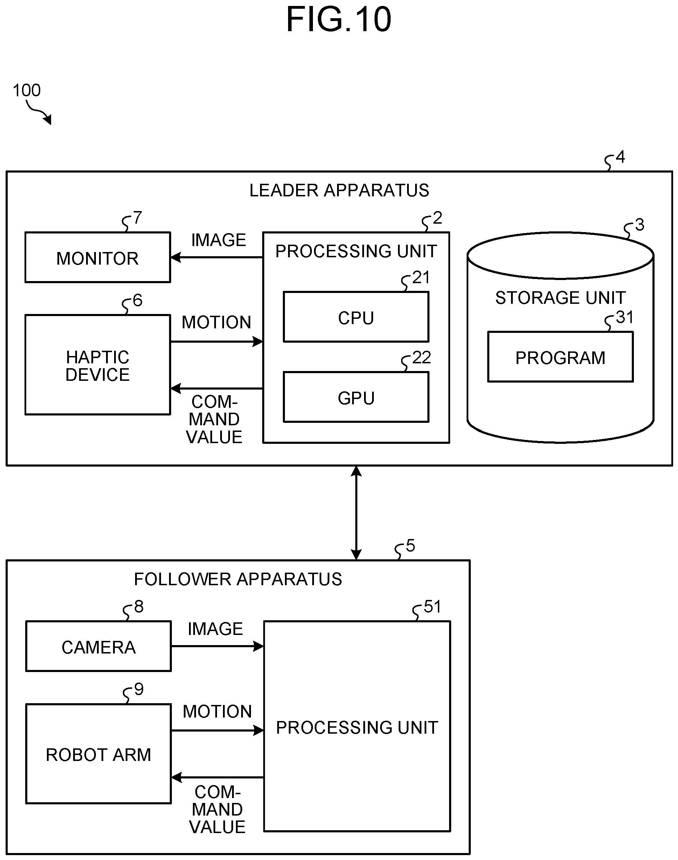

In one embodiment, the simulation may be incorporated into a master slave system. The embodiment is explained with reference to FIG. 10.

FIG. 10 is a diagram illustrating a modification. The simulator system 100 includes a leader apparatus 4 and a follower apparatus 5.

The leader apparatus 4 includes the haptic device 6, the haptic device 6, the processing unit 2, and the storage unit 3 explained above. The leader apparatus 4 is configured to be capable of communicating with the follower apparatus 5. A command value for controlling the haptic device 6 is transmitted from the processing unit 2 to the haptic device 6.

The follower apparatus 5 includes a camera 8, a robot arm 9, and a processing unit 51. The processing unit 51 observes a slave environment including a state of a patient based on a video of the camera 8. The slave environment may also include non-visual information such as a blood pressure and a heart rate of the patient. The processing unit 51 controls the robot arm 9 according to operation of the haptic device 6 in the leader apparatus 4. The control is performed by sending a command value from the processing unit 51 to the robot arm 9.

The leader apparatus 4 and the follower apparatus 5 function as a master apparatus and a slave apparatus that are capable of performing bilateral control. The haptic device 6 is operated by the user U in order to control the robot arm 9 of the follower apparatus 5 supporting the surgical instrument T in a master-slave scheme. A video of the camera 8 of the follower apparatus 5 is transmitted from the follower apparatus 5 to the leader apparatus 4 and is displayed by the monitor 7 of the leader apparatus 4. Information concerning other slave environments is also transmitted from the follower apparatus 5 to the leader apparatus 4 and presented. A motion from the haptic device 6 of the leader apparatus 4 is transmitted from the leader apparatus 4 to the follower apparatus 5 and is reflected in the control of the robot arm 9. A motion from the robot arm 9 is transmitted from the follower apparatus 5 to the leader apparatus 4 and is fed back to the user via the haptic device 6 of the leader apparatus 4.

In the leader apparatus 4, the deformation and the contact force of the soft object O1 are calculated as explained above. In the simulator system 100 illustrated in FIG. 10, a calculation result of the leader apparatus 4 is reflected in the control of the robot arm 9. For example, when the motion from the haptic device 6 of the leader apparatus 4 is transmitted to the follower apparatus 5, the control of the robot arm 9 is restricted in order to ensure safety.

Specifically, the processing unit 2 of the leader apparatus 4 executes safety determination processing based on a calculation result of the simulation model. For example, the processing unit 2 determines whether operation of the robot arm 9 of the follower apparatus 5 via the leader apparatus 4 is dangerous. When determining that the operation is dangerous, the processing unit 2 intervenes in the operation of the follower apparatus 5 by the leader apparatus 4. For example, the processing unit 2 corrects the motion transmitted from the leader apparatus 4 to the follower apparatus 5 such that a movement amount of the robot arm 9 is limited or an operation force is limited. The corrected motion is transmitted from the leader apparatus 4 to the follower apparatus 5. A determination result and a control result by the processing unit 2 are notified to the leader apparatus 4 and the follower apparatus 5.

In the above explanation, the case in which the simulator 1 and the simulator system 100 are used for surgery is explained as an example. However, uses of the simulator 1 and the simulator system 100 are not limited to surgery.

4. Example of effects

The techniques explained above are specified, for example, as explained below. One of the disclosed techniques is the simulator 1. As explained with reference to FIG. 1 to FIG. 3 and the like, the simulator 1 includes the processing unit 2. The processing unit 2 meshes and models the soft object O1 (for example, a soft tissue such as an organ) into a plurality of polyhedrons (for example, the tetrahedron t), in which particles are arranged at vertexes, such that the soft object O1 includes the plurality of particles p, and sets conditions for minimizing a potential energy density of the modeled polyhedrons as constraints (equivalent to constraint in the XPBD), and calculates, from the distance among the plurality of particles p in the polyhedron and the mass m of the plurality of particles p, deformation (for example, elastic deformation) of the soft object O1 to which an external force is applied.

With the simulator 1 explained above, the deformation of the soft object O1 is calculated by solving the FEM-based constraint with the XPBD. For example, calculation cost required for the simulation can be more reduced than when the deformation of the soft object O1 is calculated by the FEM.

The calculation of the deformation by the processing unit 2 may include calculating displacement of each of the plurality of particles p satisfying the constraints. For example, the deformation of the soft object O1 can be calculated as explained above.

The constraints may include a condition for preserving the volume energy density of each of the plurality of polyhedrons (volume conservation constraint). Accordingly, it is possible to calculate the deformation of the soft object O1 while preventing inversion of polyhedral elements due to the deformation.

The calculation of the deformation by the processing unit 2 may include calculating, using the Jacobi method, displacement of each of the plurality of particles p satisfying the constraints. By using the Jacobi method, it is easier to perform the parallel processing than, for example, when the Gauss-Zedel iteration method is used.

As explained with reference to FIG. 4, FIG. 5, and the like, the processing unit 2 may calculate, based on the calculated deformation of the soft object O1, a contact force generated by interaction between the soft object O1 and the rigid object O2 (for example, a surgical instrument). For example, as explained above, the contact force can also be accurately calculated based on accurately calculated deformation.

As explained with reference to FIG. 4, FIG. 5, and the like, the calculation of the contact force by the processing unit 2 may include totaling forces received by the particles p colliding with the rigid object O2 among the plurality of particles p of the soft object O1. For example, the contact force can be calculated as explained above. Since only the force of the particle p colliding with the rigid object O2 has to be calculated, processing speed can be improved accordingly.

As explained with reference to FIG. 6 and the like, the processing unit 2 may generate an image including the soft object O1 using the ray tracing. The image generation in this case includes imparting a texture to the surface of the soft object O1. The texture may include at least one of an albedo texture, a normal texture, a specular texture, a roughness texture, and a metallic texture. For example, by using the technique explained above, it is possible to generate a real image by the photorealistic rendering.

A simulation data generation method by the simulator 1 is also one of the disclosed techniques. The simulation data generation method includes meshing and modeling the soft object O1 into a plurality of polyhedrons (for example, the tetrahedrons t), in which the particles p are arranged at respective vertices, such that the soft object O1 includes the plurality of particles p and calculating, with conditions for minimizing potential energy density of the modeled polyhedrons as constraints, from the distance among the plurality of particles p in the polyhedrons and the mass m of the plurality of particles p, deformation of the soft object O1 to which an external force is applied. By the simulation data generation method explained above, as explained above, calculation cost required for the simulation can be reduced.

The simulator system 100 explained with reference to FIG. 1 to FIG. 3 and the like is also one of the disclosed techniques. The simulator system 100 includes the simulator 1 that meshes and models the soft object O1 into a plurality of polyhedrons (for example, the tetrahedrons t), in which particles p are arranged at respective vertices, such that the soft object O1 includes the plurality of particles p and calculates, with conditions for minimizing potential energy density of the modeled polyhedrons as constraints, from the distance among the plurality of particles p in the polyhedrons and the mass m of the plurality of particles p, deformation of the soft object O1 to which an external force is applied and the haptic device 6 operated by the user U. With the simulator system 100 explained above, as explained above, calculation cost required for the simulation can be reduced. For example, the simulator 1 may calculate a contact force generated by the interaction between the soft object O1 and the rigid object O2 based on the calculated deformation of the soft object O1. The haptic device 6 may feed back the contact force calculated by the simulator 1 to the user U. The feedback of the contact force via the haptic device 6 can provide interactivity.

As explained with reference to FIG. 10 and the like, the haptic device 6 is operated by the user U in order to control, with the master-slave scheme, the robot arm 9 supporting the surgical instrument. The calculation result of the simulator 1 may be reflected in the control of the robot arm 9. For example, as explained above, the calculation (the simulation) by the simulator 1 can be incorporated in the master slave system and used.

Note that the effects described in the present disclosure are only exemplifications and are not limited by the disclosed content. There may be other effects.

Although the embodiment of the present disclosure is explained above, the technical scope of the present disclosure is not limited to the embodiment explained above per se. Various changes are possible without departing from the gist of the present disclosure. Components in different embodiments and modifications may be combined as appropriate.

Note that the present technique can also take the following configurations.

(1) A simulator comprising
a processing unit that:

meshes and models a soft object into a plurality of polyhedrons, in which particles are arranged at respective vertices, such that the soft object includes a plurality of particles; and
calculates, with conditions for minimizing potential energy density of the modeled polyhedrons as constraints, from a distance among the plurality of particles in the polyhedrons and mass of the plurality of particles, deformation of the soft object to which an external force is applied.

(2) The simulator according to (1), wherein
the constraints are equivalent to constraints in XPBD (extended position based dynamics).
(3) The simulator according to (1) or (2), wherein
the deformation of the soft object is elastic deformation.

(4) The simulator according to any one of (1) to (3), wherein
the calculation of the deformation by the processing unit includes calculating displacement of each of the plurality of particles satisfying the constraints.
(5) The simulator according to any one of (1) to (4), wherein
the constraints include a condition for storing volume energy density of each of the plurality of polyhedrons.
(6) The simulator according to any one of (1) to (5), wherein
the calculation of the deformation by the processing unit includes calculating displacement of each of the plurality of particles satisfying the constraints using a Jacobi method.
(7) The simulator according to any one of (1) to (6), wherein
the soft object includes an organ.
(8) The simulator according to any one of (1) to (7), wherein
the processing unit calculates, based on the calculated deformation of the soft object, a contact force generated by an interaction between the soft object and a rigid object.
(9) The simulator according to (8), wherein
the calculation of the contact force by the processing unit includes totaling forces received by particles colliding with the rigid object among the plurality of particles of the soft object.
(10) The simulator according to (8) or (9), wherein
the rigid object includes a surgical instrument.
(11) The simulator according to any one of (1) to (10), wherein
the processing unit generates an image including the soft object using ray tracing.
(12) The simulator according to (11), wherein

the generation of the image by the processing unit includes imparting a texture to a surface of the soft object, and the texture includes at least one of an albedo texture, a normal texture, a specular texture, a roughness texture, and a metallic texture.

(13) A simulation data generation method comprising:

meshing and modeling a soft object into a plurality of polyhedrons, in which particles arranged at respective vertices, such that the soft object includes a plurality of particles; and
calculating, with conditions for minimizing potential energy density of the modeled polyhedron as constraints, from a distance among the plurality of particles in the polyhedron and mass of the plurality of particles, deformation of the soft object to which an external force is applied.

(14) A simulator system comprising:

a simulator that meshes and models a soft object into a plurality of polyhedrons, in which particles are arranged at respective vertices, such that the soft object includes a plurality of particles and calculates, with conditions for minimizing potential energy density of the modeled polyhedrons as constraints, from a distance among the plurality of particles in the polyhedrons and mass of the plurality of particles, deformation of the soft object to which an external force is applied; and
a haptic device operated by a user.

(15) The simulator system according to (14), wherein

the haptic device is operated by the user in order to control, with a master-slave scheme, a robot arm supporting a surgical instrument, and
a calculation result of the simulator is reflected in control of the robot arm.

(16) The simulator system according to (14) or (15), wherein

the simulator calculates, based on the calculated deformation of the soft object, a contact force generated by an interaction between the soft object and a rigid object, and
the haptic device feeds back the contact force calculated by the simulator to the user.

Reference Signs List

**EP 4 492 363 A1**

1 SIMULATOR
2 PROCESSING UNIT
21 CPU
22 GPU
3 STORAGE UNIT
31 PROGRAM
4 LEADER APPARATUS (MASTER APPARATUS)
5 FOLLOWER APPARATUS (SLAVE APPARATUS)
51 PROCESSING UNIT
6 HAPTIC DEVICE
7 MONITOR
8 CAMERA
9 ROBOT ARM
100 SIMULATOR SYSTEM
1000 COMPUTER
1050 BUS
1100 CPU/GPU
1200 RAM
1300 ROM
1400 HDD
1450 PROGRAM DATA
1500 COMMUNICATION INTERFACE
1600 INPUT/OUTPUT INTERFACE
1650 INPUT/OUTPUT DEVICE
C CAMERA
F FIELD OF VIEW
OE SURGICAL ENVIRONMENT
R ROBOT ARM
O1 SOFT OBJECT (SOFT TISSUE SUCH AS ORGAN)
O2 RIGID OBJECT (SURGICAL INSTRUMENT OR THE LIKE)
p PARTICLE
t TETRAHEDRON (POLYHEDRON)
U USER

**Claims**

1. A simulator comprising
   a processing unit that:

      meshes and models a soft object into a plurality of polyhedrons, in which particles are arranged at respective vertices, such that the soft object includes a plurality of particles; and
      calculates, with conditions for minimizing potential energy density of the modeled polyhedrons as constraints, from a distance among the plurality of particles in the polyhedrons and mass of the plurality of particles, deformation of the soft object to which an external force is applied.

2. The simulator according to claim 1, wherein
   the constraints are equivalent to constraints in XPBD (extended position based dynamics).

3. The simulator according to claim 1, wherein
   the deformation of the soft object is elastic deformation.

4. The simulator according to claim 1, wherein
   the calculation of the deformation by the processing unit includes calculating displacement of each of the plurality of particles satisfying the constraints.

5. The simulator according to claim 1, wherein
   the constraints include a condition for storing volume energy density of each of the plurality of polyhedrons.

16

**6.** The simulator according to claim 1, wherein
the calculation of the deformation by the processing unit includes calculating displacement of each of the plurality of particles satisfying the constraints using a Jacobi method.

**7.** The simulator according to claim 1, wherein
the soft object includes an organ.

**8.** The simulator according to claim 1, wherein
the processing unit calculates, based on the calculated deformation of the soft object, a contact force generated by an interaction between the soft object and a rigid object.

**9.** The simulator according to claim 8, wherein
the calculation of the contact force by the processing unit includes totaling forces received by particles colliding with the rigid object among the plurality of particles of the soft object.

**10.** The simulator according to claim 8, wherein
the rigid object includes a surgical instrument.

**11.** The simulator according to claim 1, wherein
the processing unit generates an image including the soft object using ray tracing.

**12.** The simulator according to claim 11, wherein

the generation of the image by the processing unit includes imparting a texture to a surface of the soft object, and
the texture includes at least one of an albedo texture, a normal texture, a specular texture, a roughness texture, and a metallic texture.

**13.** A simulation data generation method comprising:

meshing and modeling a soft object into a plurality of polyhedrons, in which particles arranged at respective vertices, such that the soft object includes a plurality of particles; and
calculating, with conditions for minimizing potential energy density of the modeled polyhedron as constraints, from a distance among the plurality of particles in the polyhedron and mass of the plurality of particles, deformation of the soft object to which an external force is applied.

**14.** A simulator system comprising:

a simulator that meshes and models a soft object into a plurality of polyhedrons, in which particles are arranged at respective vertices, such that the soft object includes a plurality of particles and calculates, with conditions for minimizing potential energy density of the modeled polyhedrons as constraints, from a distance among the plurality of particles in the polyhedrons and mass of the plurality of particles, deformation of the soft object to which an external force is applied; and
a haptic device operated by a user.

**15.** The simulator system according to claim 14, wherein

the haptic device is operated by the user in order to control, with a master-slave scheme, a robot arm supporting a surgical instrument, and
a calculation result of the simulator is reflected in control of the robot arm.

**16.** The simulator system according to claim 14, wherein

the simulator calculates, based on the calculated deformation of the soft object, a contact force generated by an interaction between the soft object and a rigid object, and
the haptic device feeds back the contact force calculated by the simulator to the user.

FIG.1

# FIG.2

# FIG.3

TETRAHEDRON
MESH

# FIG.4

LOCAL SPACE
LOCAL GRID

GLOBAL SPACE
GLOBAL GRID

T

P

CELL OVERLAPPING SURFACE

RESAMPLE SURFACE CELL

PARTICLE CELL

PARTICLE ADJACENT CELL

# FIG.5

$\hat{n}$

$r$

$p_1$

$p_2$

$p$

$d$

# FIG.6

RAY TRACING ENGINE

TEXTURE

TRIANGULAR MESH

DYNAMIC ACTOR

RIGID ACTOR

MATE-RIAL SETT-ING

GEOMETRY SETTING

UPDATED SURFACE MESH

UPDATE POSE

SIMULATION

POLYHEDRON MESH

RIGID BODY

XPBD METHOD

INITIALIZA-TION

INITIALIZA-TION

UPDATE

EP 4 492 363 A1

# FIG.7

SIMULATION LOOP/FRAME(60Hz)

S1
UPDATE SIMULATION MODEL

S2
TIME STEP

SUB-STEPS

S21
PREDICT POSITION

S22
DETECT COLLISION

S23
CONSTRAINT PROJECTION

S23b
COLLISION RESPONSE

ITERATION

S23a
PARALLEL SOLVER

S24
CALCULATE SPEED

S3
ACQUIRE SIMULATION RESULT

S4
UPDATE VISUAL MODEL

# FIG.8

POLYHEDRON MESH MODEL

POLYHEDRONS

INITIAL STATE

PARTICLE MODEL

DEFORMATION ELEMENT

XPBD OF FEM-BASED CONSTRAINTS

MOTION INPUT

FORCE FEEDBACK

RIGID BODY

COLLISION RESPONSE

CONTACT FORCE

VISUAL MODEL UPDATE

PHOTOREALISTIC RENDERING

EP 4 492 363 A1

# FIG.9

COMPUTER 1000

CPU/GPU 1100

RAM 1200

ROM 1300

1050

HDD 1400

PROGRAM DATA 1450

COMMUNICATION INTERFACE 1500

INPUT/OUTPUT INTERFACE 1600

1550

INPUT/OUTPUT DEVICE 1650

# FIG.10

## INTERNATIONAL SEARCH REPORT

| International application No. |
|---|
| **PCT/JP2023/006716** |

| A. | CLASSIFICATION OF SUBJECT MATTER |
|---|---|

***G09B 9/00***(2006.01)i; ***G09B 19/24***(2006.01)i; ***G09B 23/30***(2006.01)i; ***G06T 15/04***(2011.01)i; ***G06T 15/06***(2011.01)i; ***G06T 19/00***(2011.01)i; ***G06Q 10/04***(2023.01)i
FI:    G09B9/00 Z; G06T15/06; G06T15/04; G06T19/00 C; G06Q10/04; G09B23/30; G09B19/24 Z

According to International Patent Classification (IPC) or to both national classification and IPC

| B. | FIELDS SEARCHED |
|---|---|

Minimum documentation searched (classification system followed by classification symbols)
    G09B9/00; G09B19/24; G09B23/30; G06T15/04; G06T15/06; G06T19/00; G06Q10/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 緒方 正人 ほか, 手術シミュレータ／ナビゲーションへの応用をめざした軟組織計算モデルの確立, 情報処理学会研究報告 2012 (平成24) 年度▲6▼ ［ＤＶＤ－ＲＯＭ］, 18 February 2013 pp. 1-7, (OGATA, Masato et al. Soft Tissue Modeling for Surgical Simulator and Navigation System.), non-official translation (2013 IPSJ SIG Technical Report ▲6▼ [CD-ROM]) | 1-16 |
| A | JP 2010-279631 A (MITSUBISHI PRECISION CO LTD) 16 December 2010 (2010-12-16) paragraphs [0049]-[0054], fig. 1-9 | 1-16 |
| A | CN 102044086 A (NORTH CHINA UNIVERSITY OF WATER CONSERVANCY AND ELECTRIC POWER) 04 May 2011 (2011-05-04) paragraphs [0047]-[0115], fig. 1-7 | 1-16 |
| A | JP 2014-176425 A (UNIV TSUKUBA) 25 September 2014 (2014-09-25) paragraphs [0010]-[0113], fig. 1-23 | 1-16 |

☑ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 March 2023** | **11 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 492 363 A1

**INTERNATIONAL SEARCH REPORT**

International application No.

**PCT/JP2023/006716**

## C. DOCUMENTS CONSIDERED TO BE RELEVANT

| Category* | Citation of document, with indication, where appropriate, of the relevant passages | Relevant to claim No. |
|---|---|---|
| A | US 2013/0173240 A1 (UNIVERSITE LYON 1 CKAUDE BERNARD) 04 July 2013 (2013-07-04) paragraphs [0051]-[0106], fig. 1-8 | 1-16 |

Form PCT/ISA/210 (second sheet) (January 2015)

INTERNATIONAL SEARCH REPORT
Information on patent family members

International application No.

**PCT/JP2023/006716**

| Patent document cited in search report | | | Publication date (day/month/year) | Patent family member(s) | | | Publication date (day/month/year) |
|---|---|---|---|---|---|---|---|
| JP | 2010-279631 | A | 16 December 2010 | US 2012/0081367 A1 paragraphs [0032]-[0092], fig. 1-9 WO 2010/143699 A1 | | | |
| CN | 102044086 | A | 04 May 2011 | (Family: none) | | | |
| JP | 2014-176425 | A | 25 September 2014 | (Family: none) | | | |
| US | 2013/0173240 | A1 | 04 July 2013 | WO 2012/025697 A1 column 8, line 11 to p. 15, line 31, fig. 1-8 EP 2609573 A1 FR 2964030 A | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008292534 A

- JP 2013152320 A

### Non-patent literature cited in the description

- **XU, L** ; **LU, Y** ; **LIU, Q**. Integrating viscoelastic mass spring dampers into position-based dynamics to simulate soft tissue deformation in real time. *Royal Society open science*, 2018, vol. 5 (2), 171587

- **PAN, J.** ; **YANG, Y.** ; **GAO, Y** ; **QIN, H** ; **SI, Y**. Real-time simulation of electrocautery procedure using meshfree methods in laparoscopic cholecystectomy. *The Visual Computer*, 2019, vol. 35 (6), 861-872
- **VALENTIN et al.** Single-image svbrdf capture with a rendering-aware deep network. *ACM Transactions on Graphics (ToG)*, 2018, vol. 37 (4), 1-15